# EUROPEAN PATENT APPLICATION

(11) **EP 3 324 297 A1**
(43) Date of publication of application: **23.05.2018**
(21) Application number: 16824135.4
(22) Date of filing: 10.05.2016
(51) Int. Cl.: G06F 13/00

(54) **INFORMATION PROCESSING APPARATUS, INFORMATION PROCESSING METHOD, AND COMPUTER PROGRAM**

(30) Priority: 13.07.2015 JP 2015139459
(71) Applicant: Sony Corporation, Tokyo 108-0075 (JP)
(72) Inventor: TANAKA, Yoshiki, Tokyo 108-0075 (JP); UKITA, Masakazu, Tokyo 108-0075 (JP); SAITO, Shin, Tokyo 108-0075 (JP)
(74) Representative: Witte, Weller & Partner Patentanwälte mbB
(86) International application number: PCT/JP2016/063880
(87) International publication number: WO 2017/010154

(57) **Abstract**

[Object] To provide an information processing device capable of easily executing linkage processing between devices using a service on a network.

[Solution] Provided is an information processing device including: a control unit configured to transmit, when a relationship with a first device satisfies a predetermined condition defined by a predetermined service on a network, a user identifier used to identify a user and a device identifier used to identify the first device to the service and to request the service to perform processing related to linkage between the user identifier and the device identifier.

## Description

### Technical Field

The present disclosure relates to an information processing device, an information processing method, and a computer program.

### Background Art

With the development of network related technology, the size of a device that is accessible to a network tends to be smaller. In other words, it is becoming more common for a single user to hold a device that is accessible to a plurality of networks.

Further, cloud computing that uses software, data, or the like through a network such as the Internet has become widespread, and various cloud computing-based services are developed. In the cloud-based service, in some cases, different devices are used for each service, and in other many cases, a plurality of devices are used while being linked to each other. In one example, Patent Literature 1 discloses a technique enabling devices to be linked to each other.

### Citation List

### Patent Literature

- Patent Literature 1:: JP 2003-032176A

### Disclosure of Invention

### Technical Problem

In using the cloud-based service, in many cases devices to be used in the service are pre-registered when they are linked. However, in a case where a single user holds devices accessible to a plurality of networks, it can be easily considered that the pre-registration of all of these devices takes a lot of time and effort.

In view of the above, the present disclosure provides a novel and improved information processing device, information processing method, and computer program, capable of easily executing linkage processing between devices using a service on a network.

### Solution to Problem

According to the present disclosure, there is provided an information processing device including: a control unit configured to transmit, when a relationship with a first device satisfies a predetermined condition defined by a predetermined service on a network, a user identifier used to identify a user and a device identifier used to identify the first device to the service and to request the service to perform processing related to linkage between the user identifier and the device identifier.

Further, according to the present disclosure, there is provided an information processing method including: transmitting, when a relationship with a first device satisfies a predetermined condition defined by a predetermined service on a network, a user identifier used to identify a user and a device identifier used to identify the first device to the service and requesting the service to perform processing related to linkage between the user identifier and the device identifier.

Further, according to the present disclosure, there is provided a computer program causing a computer to execute: transmitting, when a relationship with a first device satisfies a predetermined condition defined by a predetermined service on a network, a user identifier used to identify a user and a device identifier used to identify the first device to the service and requesting the service to perform processing related to linkage between the user identifier and the device identifier.

Further, according to the present disclosure, there is provided a control device including: a control unit configured to execute, in a service on a network to be provided, processing related to linkage between a user identifier used to identify a user and a device identifier used to identify a first device that uses the service. The control unit determines, when performing processing related to linkage between a device identifier of a second device different from the first device and the user identifier, whether to cancel the linkage between the device identifier of the first device and the user identifier on the basis of a predetermined condition.

### Advantageous Effects of Invention

According to the present disclosure as described above, it is possible to provide a novel and improved information processing device, information processing method, and computer program, capable of easily executing linkage processing between devices using a service on a network.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrated to describe an assumption of an embodiment of the present disclosure.
[FIG. 2] FIG. 2 is a diagram illustrated to describe the assumption of the embodiment.
[FIG. 3] FIG. 3 is a diagram illustrated to describe a functional configuration example of a device 100 according to the embodiment.
[FIG. 4] FIG. 4 is a diagram illustrated to describe a functional configuration example of a service 200 according to the embodiment.
[FIG. 5] FIG. 5 is a diagram illustrated to describe the operation of a first example of the embodiment.
[FIG. 6] FIG. 6 is a diagram illustrated to describe the operation of the first example of the embodiment.
[FIG. 7] FIG. 7 is a diagram illustrated to describe an example of information held by the service 200.
[FIG. 8] FIG. 8 is a diagram illustrated to describe the operation of the first example of the embodiment.
[FIG. 9] FIG. 9 is a diagram illustrated to describe the operation of the first example of the embodiment.
[FIG. 10] FIG. 10 is a diagram illustrated to describe the operation of the first example of the embodiment.
[FIG. 11] FIG. 11 is a diagram illustrated to describe a method of checking linkage registration or the like of a sub-device to the service 200 by a sub-device 100b.
[FIG. 12] FIG. 12 is a diagram illustrated to describe the operation of a second example of the embodiment.
[FIG. 13] FIG. 13 is a diagram illustrated to describe the operation of a third example of the embodiment.
[FIG. 14] FIG. 14 is a sequence diagram illustrated to describe the operation of the third example of the embodiment.
[FIG. 15] FIG. 15 is a diagram illustrated to describe the operation of a fourth example of the embodiment.
[FIG. 16] FIG. 16 is a block diagram illustrating an example of a schematic configuration of a server.
[FIG. 17] FIG. 17 is a block diagram illustrating a hardware configuration example of a device.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Moreover, the description will be given in the following order.
1. Embodiment of present Disclosure
1.1. Overview
1.2. First Example
1.3. Second Example
1.4. Third Example
1.5. Fourth Example
2. Hardware Configuration Example
3. Concluding Remarks

### <1. Embodiment of present Disclosure>

### [1.1. Overview]

An overview of an embodiment of the present disclosure is described and then the embodiment of the present disclosure is described in detail.

With the development of network related technology, the size of a device that is accessible to a network tends to be smaller. In other words, it is becoming more common for a single user to hold a device that is accessible to a plurality of networks.

Further, cloud computing that uses software, data, or the like through a network such as the Internet has become widespread, and various cloud computing-based services are developed. In the cloud-based service, in some cases, different devices are used for each service, and in other many cases, a plurality of devices are used while being linked to each other.

In using the cloud-based service, in many cases devices to be used in the service are pre-registered when they are linked. However, in a case where a single user holds devices accessible to a plurality of networks, it can be easily considered that the pre-registration of all of these devices takes a lot of time and effort.

Further, when the device to be linked is changed into another during the use of the cloud-based service, it is very time consuming for the user to register addition, change, and deletion of the device, or even, in some cases, the user may forgets linkage registration itself. If such time consuming is taken before or during the use of the service, the service is unavailable immediately when the user wishes to use it, so inconvenience may occur.

Thus, in view of the above-mentioned points, those who conceived the present disclosure have conducted intensive studies to provide technology capable of easily executing linkage processing between devices using services on a network. Accordingly, those who conceived the present disclosure have developed the technology capable of greatly improving the convenience of the user by executing the linkage processing between devices when the relationship with another device satisfies a predetermined condition defined by a predetermined service on a network.

The above is the description of the overview of the embodiment of the present disclosure.

### [1.2. First Example]

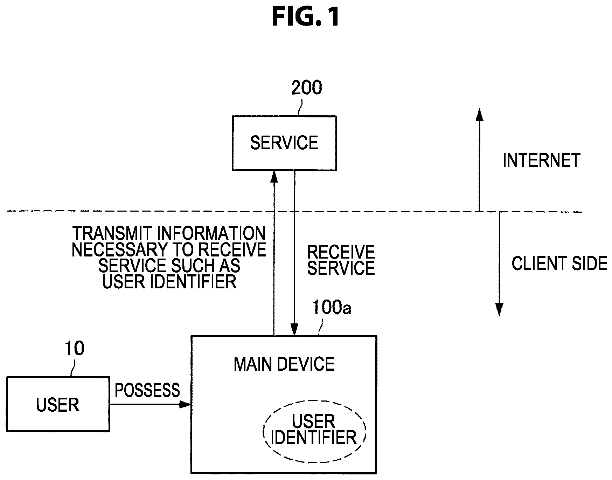

Subsequently, the embodiment of the present disclosure is described in detail by taking several examples. An assumption of the embodiment of the present disclosure is described with reference to FIG. 1. FIG. 1 is a diagram illustrated to describe an assumption of the embodiment of the present disclosure.

In the embodiment of the present disclosure, the service is based on cloud computing (hereinafter also simply referred to as a cloud). A user 10, when using a cloud-based service 200 (cloud service), has a device 100a accessible to the cloud service through a network, such as smartphones or wearable terminals held by the user. In the present embodiment, one of devices possessed by the user 10 is referred to as a main device. The main device can be any device as long as it can communicate with the cloud-based service 200. In one example, the main device can be any device possessed by the user, which may have a function to communicate with the cloud-based service 200, such as smartphones, tablet terminals, personal computers, stationary or portable game consoles, television sets, and motor vehicles.

The user 10 first makes a contract or the like for use of a target service 200, so that the service becomes available. At the time of such contract, it does not matter whether to use the main device 100a of the user 10. However, the main device 100 is herein defined as one of devices, which is normally necessary to use this service 200.

The main device 100a has a communication function for direct exchange of information with the service 200. Furthermore, the main device 100a holds a user identifier for enabling the service 200 to identify a user. However, in the present embodiment, the user is not limited to a natural person. The user may be any target that can receive services, such as legal entity or group.

The service 200, when making the service available to the user in response to a request from the user 10, issues an identifier used to identify a user in the service, such as a user ID, to the user 10. The main device 100a transmits, to the service 200, information including a user ID necessary to receive the cloud service provided by the service 200. The service 200 provides the main device 100a with a service based on information sent from the main device 100a.

The user 10 may possess a plurality of devices in addition to the main device 100a. A device that is different from the main device 100a is referred to as a sub-device. The main device can be any device as long as it can communicate directly with the main device or via other devices. In other words, the sub-device is not necessarily communicable with the service 200. In one example, the sub-device can be any device possessed by the user as long as it is capable of having a short-distance or long-distance communication function, such as smartphones, tablet terminals, personal computers, stationary or portable game consoles, television sets, head mounted displays, eyeglasses- or wristwatch-type wearable devices, electric appliances including refrigerators or microwave ovens, and sports equipment.

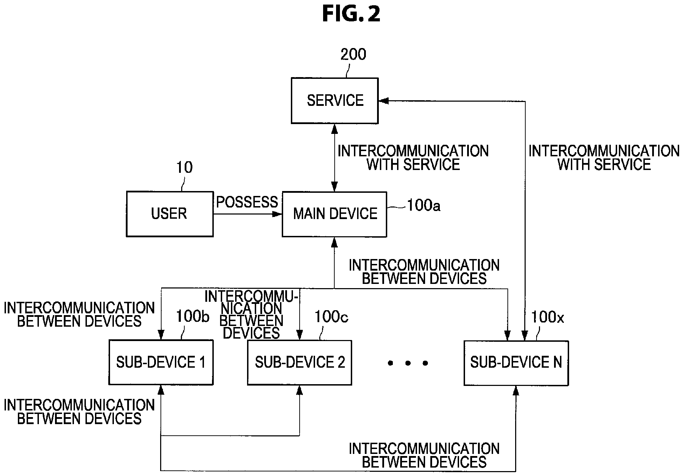

FIG. 2 is a diagram illustrated to describe the assumption of an embodiment of the present disclosure. FIG. 2 illustrates n sub-devices 100b, 100c, ..., 100x, in addition to the main device 100a. The sub-devices 100b,... have a function of performing intercommunication with the service 200 and intercommunication with other sub-devices 100b,..., in addition to intercommunication with the main device 100a.

The user 10, when using the service 200, is necessary to obtain information, functions, or the like from the sub-devices 100b,... to be used, in addition to the main device 100a. Thus, the service 200 is necessary to recognize these sub-devices 100b,... as linkage devices to be linked to the main device 100a. Moreover, the term linkage as used in the present embodiment means that devices used by a user are linked to each other.

In the present embodiment, the service 200 is caused to recognize the sub-devices 100b,... as devices to be linked to the main device 100a, so the main device 100a determines whether a predetermined condition defined by the service 200 is satisfied. Here, an example of the predetermined condition defined by the service 200 may include a contact or a relative positional relationship between the user 10 and the sub-devices 100b,..., such as a case where the user 10 touches or approaches the sub-devices 100b,.... In addition, an example of the predetermined condition defined by the service 200 may include a case where the remaining battery level or operable time of the sub-devices 100b,.... is equal to or more than a predetermined value. In other words, the service 200 may prevent the sub-devices 100b,... from being registered as devices to be linked unless the battery remaining level or the operable time is equal to or more than the predetermined value.

The assumption of the embodiment of the present disclosure is described above. Subsequently, a functional configuration example of the main device 100a or sub-devices 100b,... according to the present embodiment is described. Moreover, in the following description, the main device 100a or the sub-devices 100b,... are also simply referred to as the device 100 when being collectively referred.

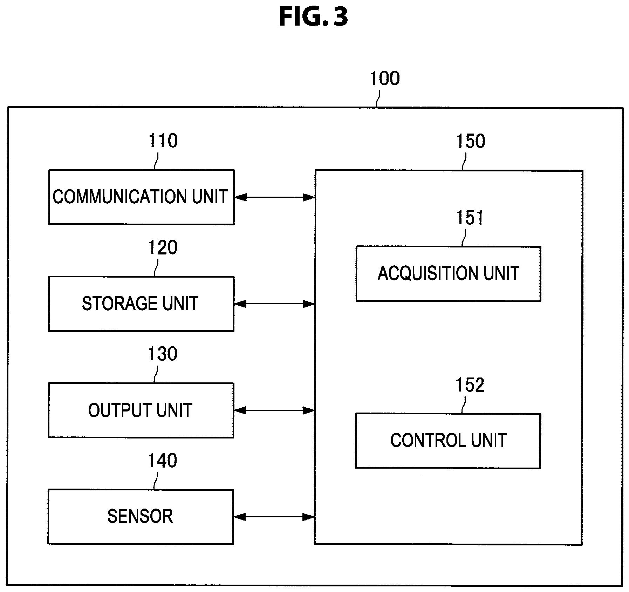

FIG. 3 is a diagram illustrated to describe a functional configuration example of the device 100 according to the present embodiment. The device 100 illustrated in FIG. 3 may be either the sub-devices 100b,... or the main device 100a. A functional configuration example of the device 100 according to the present embodiment is now described with reference to FIG. 3.

As illustrated in FIG. 3, the device 100 according to the present embodiment includes a communication unit 110, a storage unit 120, an output unit 130, a sensor 140, and a processing unit 150.

The communication unit 110 transmits and receives information by wireless or by wire. In one example, the communication unit 110 exchanges information with the service 200 or with other devices 100. The communication unit 110 may have, in one example, cellular communication functionality, Wi-Fi communication functionality, Bluetooth (registered trademark) communication functionality, or the like.

The storage unit 120 temporarily or permanently stores data and a program that allows the device 100 to run. In one example, the storage unit 120 temporarily or permanently stores the information acquired by an information acquisition unit 151. The storage unit 120 may store data used to allow a control unit 153 to perform various controls. The storage unit 120 may be composed of, in one example, a hard disk drive, a solid-state drive, a flash memory, or the like.

In the present embodiment, the storage unit 120 stores information that is used to uniquely identify the device 100. The information used to identify uniquely the device 100 is also referred to as a device identifier in the present embodiment.

The output unit 130 has a function of outputting various types of information to notify the user 10 of information. The output of information by the output unit 130 can be performed, in one example, under the control of the control unit 153. The output unit 130 may be composed of, in one example, a display for outputting information using characters or images, a loudspeaker for outputting information using sound, a vibrator for outputting information using vibration, or the like.

The sensor 140 is a device that senses various states. The sensor 140 may include, in one example, a sensor for acquiring a current position, such as global positioning system (GPS), global navigation satellite system (GLONASS), BeiDou navigation satellite system (BDS), and iBeacon, a camera, a camera with depth information, a motion detector, a microphone, an acceleration sensor, an angular velocity sensor, or the like.

The information acquired by the sensor 140 is sent to the processing unit 150 as necessary. Then, the processing unit 150 executes various processes on the basis of the information sent from the sensor 140.

The processing unit 150 allows the device 100 to perform various functions. The processing unit 150 includes the information acquisition unit 151 and the control unit 153. Moreover, the processing unit 150 may further include components other than these components. In other words, the processing unit 150 can also perform operations other than the operations of these components.

The information acquisition unit 151 acquires various types of information from a signal received by the communication unit 110. In addition, the information acquisition unit 151 can acquire information or a program, which allows the device 100 to run, from the storage unit 120. In addition, the information acquisition unit 151 acquires various types of information acquired by the sensor 140.

The control unit 153 controls the operation of the device 100. In the present embodiment, the control unit 153 detects the presence of another device 100 and determines whether the relationship between them satisfies a predetermined condition defined by the service 200. If the control unit 153 determines that the relationship with the other device 100 satisfies the predetermined condition defined by the service 200, the control unit 153 requests the service 200 to perform processing for linkage between its own device and the other devices 100. In the present embodiment, the linkage processing refers to processing for registering the information as being a device used by a user.

The control unit 153, when requesting the service 200 to perform the linkage processing between its own device and other device 100, transmits, to the service 200, a user identifier used to identify a user in the service provided by the service 200 and a device identifier of the device 100 to be newly linked. In the case where the service 200 performs the linkage processing, a user identifier used to identify the user is associated with the device identifier of the device 100 to be newly linked.

Various methods may be employed for the control unit 153 to detect the presence of other device 100. In one example, the control unit 153 may detect the presence of other device 100 by allowing the sensor 140 to detect a contact with the other device 100. Alternatively, the control unit 153 may detect the presence of other device 100 by detecting that the position of the other device 100 acquired by the information acquisition unit 151 is within a predetermined range from the position acquired by the sensor 140 of its own device.

The functional configuration example of the device 100 according to the present embodiment is described above with reference to FIG. 3. Subsequently, a functional configuration example of the service 200 according to the present embodiment is described.

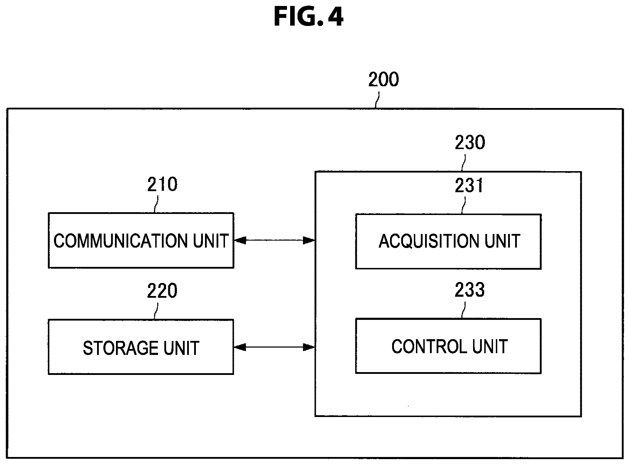

FIG. 4 is a diagram illustrated to describe a functional configuration example of the service 200 according to an embodiment of the present disclosure. The functional configuration example of the service 200 is now described with reference to FIG. 4.

As illustrated in FIG. 4, the service 200 includes a communication unit 210, a storage unit 220, and a processing unit 230.

### (Communication Unit 210)

The communication unit 210 transmits and receives information. In one example, the communication unit 210 transmits information to other nodes, for example, the device 100, and receives information from other nodes. In the present embodiment, the communication unit 210 can receive a request to perform the linkage processing between the devices 100.

### (Storage Unit 220)

The storage unit 220 temporarily or permanently stores data and a program that allows the service 200 to run. In one example, the storage unit 220 temporarily or permanently stores the information acquired by an information acquisition unit 231. The storage unit 220 may store data used to allow the control unit 233 to perform various controls. The storage unit 220 may be composed of, in one example, a hard disk drive, a solid-state drive, or the like. In the present embodiment, the storage unit 220 may hold, in one example, a table in which user information including the user identifier is managed and a table in which the user identifier and the device identifier are associated with each other. Examples of the table in which the user information including the user identifier is managed and the table in which the user identifier and the device identifier are associated with each other are described in detail later.

### (Processing Unit 230)

The processing unit 230 allows the communication resource transaction server 300 to perform various functions. The processing unit 330 includes the information acquisition unit 231 and the control unit 233. Moreover, the processing unit 230 may further include components other than these components. In other words, the processing unit 230 can also perform operations other than the operations of these components.

### (Information Acquisition Unit 231)

The information acquisition unit 231 acquires information used to run the service 200 and acquires information received from other nodes. The information acquisition unit 231 can acquire information and a program, which allows the service 200 to run, from the storage unit 220. In the present embodiment, the information acquisition unit 231 acquires the request to perform the linkage processing between the devices 100, which is received by the communication unit 210, from the communication unit 210.

### (Control Unit 233)

The control unit 233 controls the operation of the service 200. The control unit 233 can operate on the basis of the information acquired by the information acquisition unit 231. In the present embodiment, the control unit 233 executes the linkage processing between the devices 100 in response to a request from the device 100. The control unit 233, when executing the linkage processing between the devices 100, updates items in the table, which is stored in the storage unit 220, in which the user identifier and the device identifier are associated with each other. Then, the control unit 233 transmits a result obtained by the linkage processing to the device 100 that has transmitted the request for the linkage processing, as necessary.

There may be a case where the device identifiers of one or more sub-devices is previously linked to the user identifier and a request to further register the linkage of another sub-device is sent from the device 100. In this case, in performing the processing for linkage with a new sub-device, the control unit 233 may determine whether to cancel the previous linkage between the device identifier of the sub-device and the user identifier on the basis of the predetermined condition.

In one example, if the number of linkable sub-devices reaches the upper limit, the control unit 233 determines whether to perform linkage with a new sub-device or to refuse the linkage. In the case where the linkage with a new sub-device is performed, the previous linkage between the sub-devices is necessary to be canceled, so it is canceled on the basis of the predetermined condition. An example of the linkage between sub-devices by the control unit 233 will be described in detail later.

The function configuration example of the service 200 is described above with reference to FIG. 4. Moreover, the service 200 illustrated in FIG. 4 may include a single server device or a plurality of server devices.

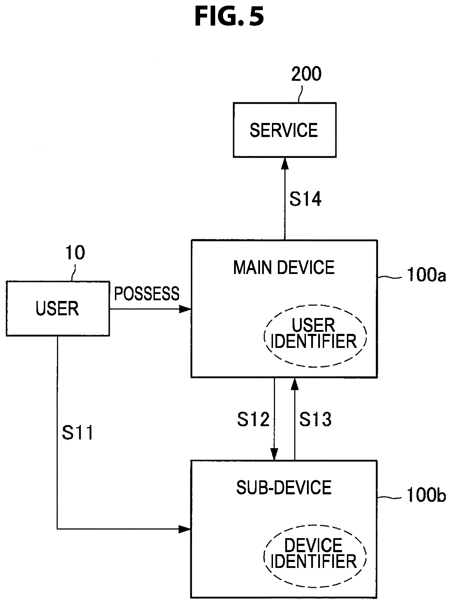

Subsequently, the operation of a first example is described. FIG. 5 is a diagram illustrated to describe the operation of the first example of the present embodiment. FIG. 5 is a diagram illustrated to describe the operation in which the user 10 previously possesses the main device 100a and performs the linkage with a new sub-device 100b. Moreover, in the following description, the control unit 153 illustrated in FIG. 3 executes the internal processing of each device. It is assumed that the control unit 153 appropriately uses the information acquired by the information acquisition unit 151 in performing the internal processing. In addition, the control unit 233 illustrated in FIG. 4 executes the internal processing of the service 200. It is assumed that the control unit 233 appropriately uses the information acquired by the information acquisition unit 231 in executing the internal processing.

In a state where the user 10 previously possesses the main device 100a, if the predetermined condition defined by the service 200 is satisfied (step S11) such as a case where the user 10 touches the sub-device 100b or a case where the distance between the sub-device 100b and the main device 100a is equal to or less than a predetermined distance, the main device 100a detects the presence of the sub-device 100b (step S12).

The main device 100a, when detecting the presence of the sub-device 100b, requests the sub-device 100b to transmit its device identifier. The sub-device 100b transmits its own device identifier to the main device 100a in response to the request (step S13). The main device 100a, when receiving the device identifier of the sub-device 100b, transmits the device identifier of the sub-device 100b together with the user identifier held therein to the service 200, and requests the service 200 to register the linkage with the sub-device 100b as a device of the user itself (step S14). The linkage registration refers to processing of associating a user-identifying identifier issued by the service 200 with a device identifier held by each device.

In the example of FIG. 5, the user identifier held by the main device and the device identifier of the sub-device 100b, which is to be a target for the new linkage registration, are transmitted to the service 200. However, the main device may transmit, to the service 200, information used to identify a user (e.g., user account) in the service provided by the service 200, in addition to the user identifier that is held therein.

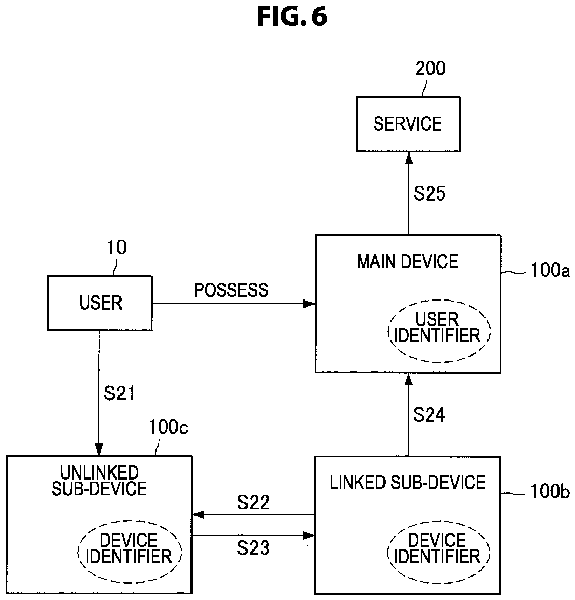

FIG. 6 is a diagram illustrated to describe the operation of the first example of the present embodiment. FIG. 6 is a diagram illustrated to describe the operation in which the user 10 previously possesses the main device 100a and performs the linkage with a new sub-device 100c.

In a state where the user 10 already owns the sub-device 100b that is previously linked with the main device 100a in the service 200, if the predetermined condition defined by the service 200 is satisfied (step S21) such as a case where the user 10 touches the sub-device 100c that is a device different from the sub-device 100b or a case where the distance between the sub-device 100c and the main device 100a is equal to or less than a predetermined distance, the sub-device 100b detects the presence of the sub-device 100c (step S22). The presence of the sub-device 100c is detected by the control unit 153 on the basis of, in one example, information acquired by the information acquisition unit 151.

The sub-device 100b, when detecting the presence of the sub-device 100c, requests the sub-device 100c to transmit a device identifier of the sub-device 100c. The sub-device 100c transmits its own device identifier to the sub-device 100b (step S23). The sub-device 100b, when receiving the device identifier of the sub-device 100c, sends the acquired device identifier of the sub-device 100c to the main device 100a (step S24). Then, the main device 100a transmits the device identifier of the sub-device 100c to the service 200 together with the user identifier that is held therein, and requests the service 200 to perform linkage of the sub-device 100c as a device of the user itself (step S25).

The contact or close proximity between the user 10 who possesses the main device 100a and the sub-devices 100b,... can be recognized, in one example, by a method of recognition using a contact sensor, a method of recognition using analysis with video or sound, or a combination of both. In other words, it is sufficient if there is a mechanism in which one emits a signal and the other receives, analyzes, and recognizes it, so both sides can be mutually recognized. The contact or close proximity between the user 10 who possesses the main device 100a and the sub-devices 100b,... may be recognized using a method of recognizing the devices by causing electromagnetic induction due to magnetic force or the like, in addition to signals, to be influenced by each other between the two devices.

Further, the relative position relationship between the devices may be detected employing a method of using absolute position information using GPS or Wi-Fi radio field intensity, a method of directly sensing it between devices, or a combination of these methods.

In addition, not only the case where the contact or the relative positional relationship between the main device 100a and the sub-devices 100b,... but also the case where the sub-devices 100b,... fall within the range of a particular absolute position, the linkage registration may be automatically performed by the service 200. In the case where the absolute position information is used, the main device 100a detects that the target sub-devices 100b,... are positioned within the specific range, and the linkage registration may be automatically performed from the main device 100a to the service 200. The absolute position of the sub-devices 100b,... may be specified using a method of using absolute position information using GPS or Wi-Fi radio field intensity, or a combination of these methods.

It is possible for a device whose user identifier is associated with a device identifier to provide other devices with information or functions necessary for using the service. Here, the device identifier is information that is able to specify uniquely a device as a global from the service point of view. The service 200 may use a combination of a plurality of pieces of information as a substitute for the device identifier as long as the device identifier can be specified uniquely by combining the plurality of pieces of information.

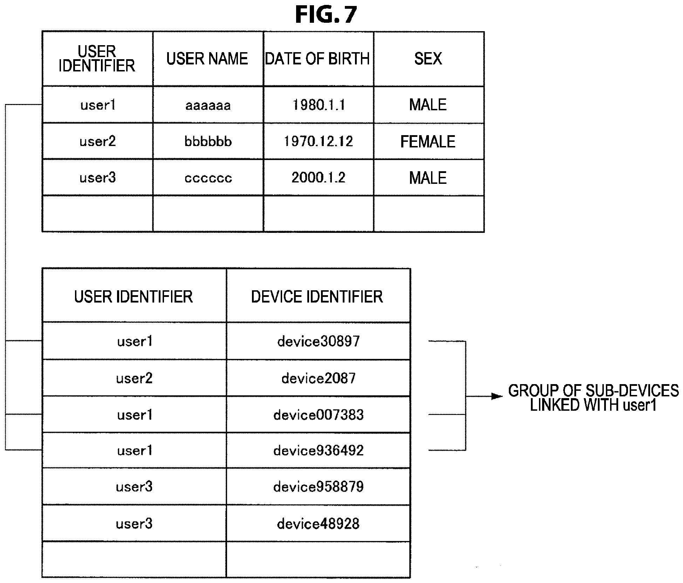

FIG. 7 is a diagram illustrated to describe an example of information held by the service 200. FIG. 7 illustrates a table in which user information is managed and a table in which the user identifier and the device identifier are associated with each other. These pieces of information are stored in, in one example, the storage unit 220. The service 200 holds the table in which the user identifier and the device identifier are associated with each other, so the service 200 is capable of managing which user is associated with which device. The example of FIG. 7 illustrates that the user having the user identifier of "user1" possesses three devices that use the service 200.

In other words, a request for linkage registration or a request for linkage cancellation, which is transmitted from the main device 100a to the service 200, allows the items in the table in which the user identifier and the device identifier are associated with each other as illustrated in FIG. 7 to be updated. The processing of updating the item in the table in which the user identifier and the device identifier are associated with each other is the processing related to the linkage between the devices executed by the service 200.

Moreover, a single sub-device may be associated with user identifiers of a plurality of users. In a case where a single sub-device is associated with user identifiers of a plurality of users, the determination of whether to provide information or functions that can be provided by the sub-device for all the associated users or to provide it for only some users may depend on the contents of the cloud service provided by the service 200.

In the case where, in performing the linkage registration between sub-devices, in one example, it is necessary for the sub-devices to operate an adjustment function, such as calibration, it may be possible for this adjustment function to be performed automatically. In other words, the adjustment function such as the calibration of the sub-device may be performed, but in the case where the adjustment function does not operate, it may be possible for the linkage registration in the service 200 to fail. In one example, there may be a case where the linkage registration of a sub-device is performed and the microphone of the sub-device is allowed to be available from the main device. In this case, the main device may cause the sub-device to detect the noise for the first few seconds during sound collection by the microphone so that the sub-device adjusts the level of the microphone depending on the level of the noise detected by the sub-device.

It is also possible to cancel the linkage registration with respect to the sub-device that is previously registered as being linked. The linkage registration of a sub-device is automatically canceled in the main device or the sub-device, in the case where the condition defined by the service 200 is satisfied, such as a case where the relative or absolute positional relationship changes or a case where the sub-device has no response for a certain period.

In the case where the linkage registration is canceled, the notification to the linked device (the main device and the sub-device) is not necessarily to be performed. Of course, it is conceived that there may be cases in which some action is taken by notifying that the linkage registration is canceled, but it is assumed to depend on the cloud service policy provided by the service 200. As will be described later, it may be possible to individually determine the presence or absence of notification that the linkage registration is canceled on the basis of the profile of the service or the profile of the device.

It is also possible to recognize that a sub-device that is previously registered as being linked is newly replaced with another sub-device depending on the conditions defined by the service 200. In the case where a sub-device that is previously registered as being linked is newly replaced with another sub-device, the linkage of the sub-device that is previously registered as being linked is automatically cancelled, and then a new sub-device is registered as a target to be linked in the service 200.

An example of a method of distinguishing whether to register a sub-device as a new linkage target or to be replaced with another sub-device is described.

First, each of the sub-devices has a device profile, such as device type, in which information used for the linkage registration in the service 200 is written. The service 200 has a service profile in which information necessary for determination of the linkage of the device is written.

The followings are conceived as the information held by the service profile. Of course, the service profile can be designed so that it can be expanded to have information other than the information listed below.

Examples of the information held by the service profile may include a service identifier used to uniquely identify services, a device profile requirement that is necessary for the linkage in using the service, and the number of devices (minimum number and maximum number) satisfying the requirement. For the device profile requirement, only a device profile ID may be used, or other information in addition to the device profile ID may be used. As a method of using the minimum number of devices and the maximum number of devices, in the case where one of both is necessarily used, the minimum number and the maximum number are both set to 1. In addition, it is possible for only one device that satisfies a device profile requirement to be linked optionally by setting the minimum number to 0 and the maximum number to 1.

Further, examples of the information held by the service profile may include a linkage condition or priority of a sub-device. The service 200 is capable of determining whether to execute the linkage processing or which device is to be a state where the linkage is performed preferentially when the number of devices excesses the maximum number on the basis of the linkage condition or the priority of a sub-device.

The followings are conceived as the information held by the device profile. Of course, the device profile may be designed so that it can be expanded to have information other than the information listed below.

Examples of the information held by the device profile can include a device profile ID used to identify uniquely the device profile, information on access permission of the device, or the like. The information on the access permission of the device may include, in one example, a definition regarding the disclosure range. The condition, level, or the like regarding the disclosure range is not defined in the device profile, and here, only the fact that there is information called condition definition regarding the disclosure range is defined in the device profile. The condition, level, or the like regarding the disclosure range may be freely defined in a programmable manner depending on the contents of the cloud service provided by the service 200.

Further, the information held by the device profile may include information used to identify whether the device is private or public. If it is a public one, the information used to identify whether the device is located in a secure place such as home or school or is located in an insecure place other than such place may be included in the device profile.

When the main device is intended to link with other device, the main device refers to a device profile of the other device. If the device is located in the secure place such as home or school, the main device regards the other device to be secure and requests the service 200 to register the linkage. If the device is located in the insecure place, the main device regards the other device to be insecure and does not necessarily request the service 200 to register the linkage.

Each of the devices 100 may hold a user profile that is information on a user having the device. Then, when the main device 100a and the sub-device 100b are intended to link with each other, the main device 100a refers to the user profile, and so it is possible to determine whether the main device 100a and the sub-device 100b are allowed to link with each other.

Here, the service 200 sets the upper limit number of device types of sub-devices that are allowed to be linked in the service profile. If the number of the linked devices of the same profile does not reached the upper limit, the service 200 performs a new linkage registration, but if the upper limit is already reached, the service 200 cancels the linkage of the previously linked sub-device of the same profile. This is performed at the timing of the linkage registration of a new sub-device depending on the setting of the upper limit number.

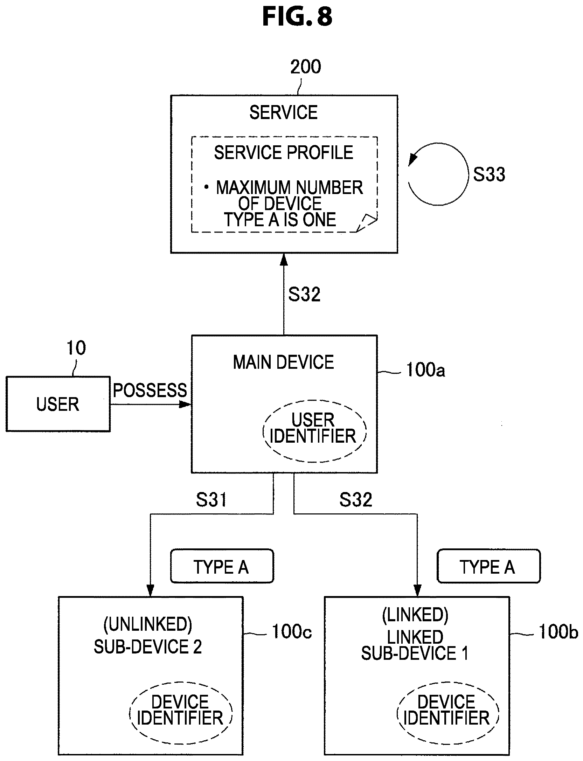

FIG. 8 is a diagram illustrated to describe the operation of the first example of the present embodiment. FIG. 8 is a diagram illustrated to describe the operation in which the user 10 previously possesses the main device 100a and the sub-device 100b and the user 10 performs the linkage with a new sub-device 100c. Moreover, the exemplary operation illustrated in FIG. 8 is assumed to be started from the point where the main device 100a detects the presence of the sub-device 100c.

The main device 100a, when detecting the presence of the sub-device 100c, requests the sub-device 100c to transmit its own device identifier and device type (step S31). The sub-device 100c transmits its own device identifier and device type to the main device 100a in response to the request.

The main device 100a, when acquiring the device identifier and the device type from the sub-device 100c, transmits the device identifier of the sub-device 100c together with the user identifier held by the main device 100a to the service 200. Then, the main device 100a requests the service 200 to perform linkage of the sub-device 100c as a device of the user itself (step S32).

The service 200, when acquiring the device identifier and the device type from the main device 100a, checks registration information of the device and determines whether the number of registered devices has already reached the upper limit number of the device type. In one example, for a certain device type, there may be a case where it is set in the service profile that at most one sub-device can be registered and the information on the sub-device of the device type is newly sent. In this case, the service 200 cancels the linkage registration of the previously registered sub-device and registers linkage of the sub-device whose device identifier is newly sent.

In the example of FIG. 8, it is assumed that the sub-device 100b and the sub-device 100c are device type A and it is set in the profile of the service 200 that at most one sub-device can be registered in this device type A. In this case, the service 200 performs the linkage registration of the sub-device 100c whose device identifier is newly sent (step S33), and cancels the linkage registration of the previously registered sub-device 100b (step S34).

In the case where there are a plurality of candidates for the sub-devices that can be canceled, the determination may be automatically performed by the service 200, in one example, on the basis of a condition for information that can be recognized as a service, such as a relative position and a use frequency. Whether the linkage registration is updatable during use of the service can also be defined in the service profile. Thus, if the service profile defines that the sub-device in the processing of using the cloud service is not allowed to update the linkage registration, the service 200 does not update the linkage registration even if a new device identifier is sent.

Further, in the case where there are a plurality of candidates for the sub-devices that can be canceled, in one example, the service 200 may cancel the sub-device that is oldest registered as being linked or may cancel the sub-device whose date of manufacture is the oldest. Of course, the service 200 can determine a sub-device to cancel the linkage using other indicators.

The sub-device may directly communicate with the service 200 or may be connected to the service 200 via the main device. Of course, the sub-devices may be connected in multiple stages, and the communication path between the sub-device and the cloud service 200 is not limited.

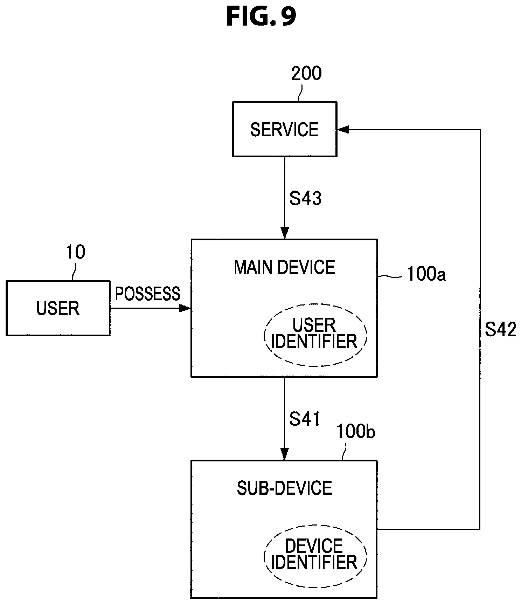

FIG. 9 is a diagram illustrated to describe the operation of the first example of the present embodiment. FIG. 9 is a diagram illustrated to describe the operation in which the user 10 previously possesses the main device 100a and performs the linkage with a new sub-device 100c.

In a state where the user 10 previously possesses the main device 100a, if the predetermined condition defined by the service 200 is satisfied such as a case where the user 10 touches the sub-device 100b or a case where the distance between the sub-device 100b and the main device 100a is equal to or less than a predetermined distance, the main device 100a detects the presence of the sub-device 100b and transmits the user identifier to the sub-device 100b (step S41). The presence of the sub-device 100b is detected by the control unit 153 on the basis of, in one example, information acquired by the information acquisition unit 151.

The sub-device 100b, when receiving the user identifier transmitted from the main device 100a, transmits the device identifier of the sub-device 100b together with the user identifier to the service 200, and requests the service 200 to register the linkage with the sub-device 100b as a device of the user having the user identifier (step S42). The service 200 registers the linkage with the sub-device 100b and notifies the main device 100a of the result of the linkage registration (step S43).

In this manner, the user identifier is delivered from the main device 100a to the sub-device 100b, so it is also possible to link with the sub-device 100b. However, if the important information such as the user identifier is delivered to an unreliable sub-device, it is likely to be illegally used by the sub-device. Thus, in one example, a parameter such as reliability of the device is set, and if the reliability of the device exceeds a predetermined threshold value, the main device 100a may be allowed to deliver the user identifier to the sub-device.

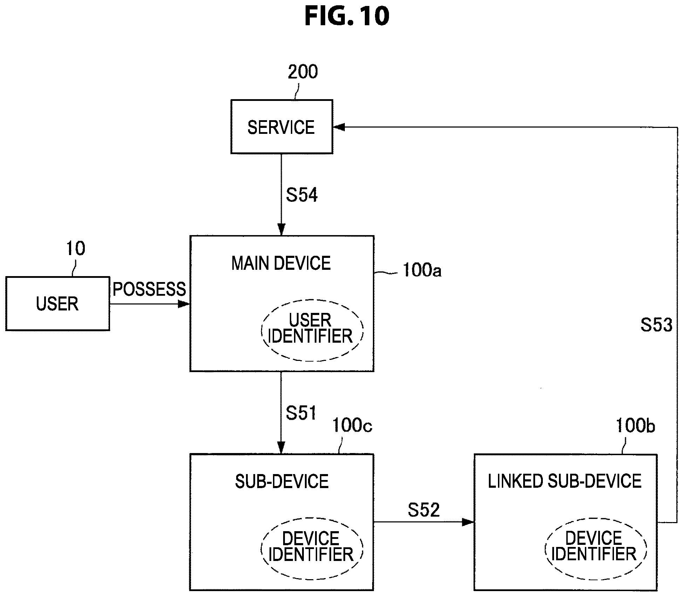

FIG. 10 is a diagram illustrated to describe the operation of the first example of the present embodiment. FIG. 10 a diagram illustrated to describe the operation in which the user 10 previously possesses the main device 100a and the sub-device 100b and performs the linkage with a new sub-device 100c.

In a state where the user 10 previously possesses the main device 100a and the sub-device 100b, if the predetermined condition defined by the service 200 is satisfied, such as a case where the user 10 touches the sub-device 100c or a case where the distance between the sub-device 100c and the main device 100a is equal to or less than a predetermined distance, the main device 100a detects the presence of the sub-device 100c and transmits the user identifier to the sub-device 100c (step S51). The presence of the sub-device 100c is detected by the control unit 153, in one example, on the basis of the information acquired by the information acquisition unit 151.

The sub-device 100c, when receiving the user identifier transmitted from the main device 100a, transmits the device identifier of the sub-device 100c together with the user identifier to the sub-device 100b linked with the main device 100a (step S52). The sub-device 100b, when receiving the user identifier of the main device 100a and the device identifier of the sub-device 100c, transmits the user identifier and the device identifier of the sub-device 100c to the service 200. Then, the sub-device 100b requests the service 200 to register the linkage with the sub-device 100c as a device of the user having the user identifier (step S53). The service 200 registers the linkage with the sub-device 100c and notifies the main device 100a of the result of the linkage registration (step S54).

Moreover, in the exemplary operation illustrated in FIG. 10, the sub-device 100c, when receiving the user identifier from the main device 100a, also receives information on the sub-device 100b that transmits the device identifier of its own device. The information on the sub-device 100b may include information necessary for the sub-device 100c to transmit information to the sub-device 100b.

Moreover, the devices can mutually communicate by using an existing mobile communication network, communication via an access point such as Wi-Fi, or direct communication between devices such as Bluetooth. Then, eventually, it is sufficient for one of the devices to connect to the cloud service.

The service 200 may have a mechanism for manually performing the registration or cancellation of linkage or the replacement by the user as a use of a fallback plan or the like of a mechanism for automatically performing the registration or cancellation of linkage of the sub-device or the replacement between the sub-devices.

Further, in performing the registration or cancellation of linkage or the replacement between the sub-devices by the service 200, each device can notify visually, audibly, and tactually the user that the operation is properly completed or failed.

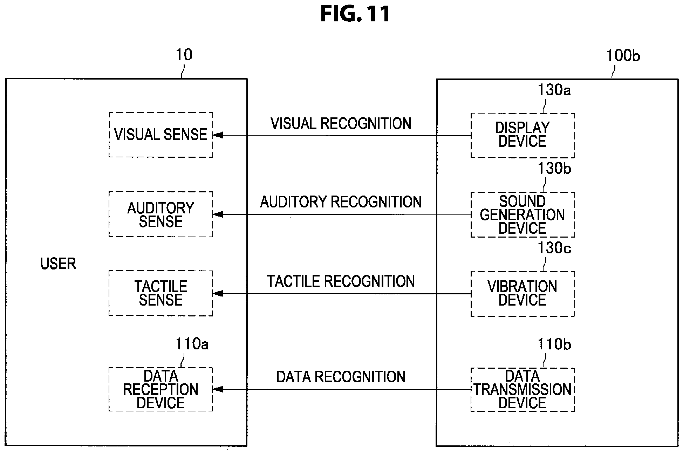

FIG. 11 is a diagram illustrated to describe a method of checking the registration or the like of linkage of a sub-device in the service 200 by a certain sub-device 100b. The sub-device 100b may output information through a display device 130a to appeal to the user's visual sense, may output information through a sound generation device 130b to appeal to the user's auditory sense, or may output information through a vibration device 130c to appeal to the user's tactile sense. This makes it possible for the sub-device 100b to notify the user of the registration or the like of linkage of a sub-device in the service 200. In addition, in the case where the user 10 is a program or the like that can directly understand digital data such as artificial intelligence (AI), the data specified to be recognizable by AI may be transmitted from a data transmission device 130d.

The information of the two profiles (service profile and device profile) described above can be defined independently of each other, but the service 200 uses these two profiles in combination. In addition, it is also possible for each cloud service to have definition of a service profile. The reason for having the definition of the service profile for each cloud service is to make it possible to change the service profile depending on the usage form of the cloud service. Each service appropriately determines which service profile to use.

Similarly, each device also may have a plurality of device profiles. This is because the functions that can be provided by each sub-device are not limited to one. In performing the linkage registration, the sub-device provides a plurality of device profiles for the service, and each device may determine which function among the functions of the sub-device is used as being linked by using the device profile provided for the service.

An application example in the case where the above-described first example is applied to a specific service is now described.

### (First Application Example: Online game using wearable device)

This first application example is based, when a user plays an online game using cloud-based technology, on the assumption that the game uses, in one example, a sensing device carried by the user, such as a motion controller, a wristband type wearable device, a head mound display capable of displaying an image, such as augmented reality (AR) or virtual reality (VR), in addition to a display device such as a game console and a stationary television.

The application of the first example eliminates prior linkage registration of these devices. In other words, if the user grips a motion controller, wears a wristband type device, wears a head mound display, or the like, the service side automatically registers the linkage of each device. This automatic linkage registration of each device in the service side makes it possible for the user to enjoy the online game using these devices without prior linkage registration. In this case, the main device may be any device. In one example, a game console, a stationary television, a smartphone carried by the user, or the like may be the main device.

On the other hand, if the user takes an action such as releasing the motion controller, removing the wristband type device, and removing the head mound display after the user plays the game, the service side automatically cancels the linkage registration of each device. The linkage registration of each device is canceled automatically in the service side, and so the user is not necessary to do anything to cancel the linkage registration after enjoying the online game.

Further, in the middle of playing the game, in one example, in the case where the head mounted display worn by the user has failed, if a user wears a spare head mounted display or borrows and wears a head mounted display of another user, the service side automatically registers the linkage of the new head mounted display. This automatic registration of the linkage in the service side makes it possible for the user to enjoy an online game using the new head mounted display without prior linkage registration.

In this case, the service is provided with the device profile for the head mounted display, and the device having the device profile for the head mounted display is regarded as the head mounted display. Furthermore, the service may have a condition that the number of sub-devices having the profile of the head mounted display is at most one for each user. This condition makes it possible for the service to cancel automatically the linkage with the head mounted display that is registered previously as being linked when the user wears the new head mound display.

### (Second Application Example: Improvement service for improving golf skills)

The second application example is based, when the user actually plays a round of golf, on the assumption of a service of acquiring data such as the swing trajectory of a golf club and the curvature of a golf ball hit by the user with the club and providing information for improving the golf skills.

A sensor is embedded in advance in golf equipment such as a golf club, a caddy bag, or a golf ball used by a user. In the case of a golf club, the sensor can record swing trajectory, swing speed, the position and angle on the head where the golf ball hits, or the like. In addition, in the case of a golf ball, the sensor can record the flying trajectory. However, neither the golf club nor the golf ball has the function of directly communicating with the cloud, but it is sufficient if the golf club has a communication function capable of providing information inside each device to the device existing in the short distance.

The user, when playing golf, can hold a device that can be a main device such as a smartphone in a pocket of pants or the like. When the user grips the golf club, the smartphone recognizes the golf club and requests the service side to link with it.

When the user hits a golf ball with the golf club, the golf club recognizes the golf ball hit at that point of time and requests the service side to be linked via the smartphone. Likewise, other tools such as golf tee are registered as being linked on the service side.

An identifier of a golf club or a golf ball actually used is transmitted to a service on the cloud via a smartphone that is the main device. The service side is in a state where it is possible for the user to recognize which golf club and golf ball are used by the user.

Information on the trajectory of the golf ball being played is accumulated in the golf ball, and when the distance between the smartphone and the golf ball, such as the timing of each stroke, becomes a communicable distance, the trajectory information is transmitted to the smartphone. The smartphone, when receiving the trajectory information, transfers the trajectory information to the service on the cloud.

Similarly, the swing information of the gold club at each stroke is transmitted to the smartphone at the timing when the user hits the golf ball. The smartphone, when receiving the swing information, transfers the swing information to the service on the cloud. As a result, the service can collect data as appropriate during the user's actual round.

Then, all the data is collected at the time when the user finishes the round, so it is possible for the service to diagnose the play of the user by using the data and to provide the diagnosis result including the advice that can be utilized in the next round for the user.

During a round of golf, a single user typically uses only one golf ball. Thus, the service side can define the maximum linkage number of devices having the profile of a golf ball as one. In the case where the user uses another golf ball in the case of water hazard, OB, or the like, it is possible to register the linkage of a new golf ball at the timing of hitting the new golf ball and, at the same time, to cancel the linkage registration of the golf ball used until then. In addition, the maximum number of golf clubs that can be used during a round of golf is 14, so the service side may define the maximum linkage number of devices having the profile of the golf club as 14.

When a user newly links with a golf club or a golf ball, the user can check whether it is linked in a series of golf works. In one example, the golf club can notify the user that the golf club is registered as being linked in the service by, in one example, vibrating the gripped portion after the user grips it. Further, in one example, the golf ball can notify the user that the golf club is registered as being linked in the service, in one example, by lighting for several seconds after the user hits the golf ball with the golf club.

### (Third Application Example: Data conversion service of soccer game)

The third application example is based on the assumption of a service that converts the contents of a soccer game into data. In this case, the description is given by assuming an example of player's shoes, a soccer ball, and a ground as a sub-device. It is assumed that information that can identify players and their teams is included in shoes. In addition, it is assumed that the positions of the shoes and the ball are identifiable, and if the ball contacts the shoes, information on players and their teams can be obtained from the shoes that touched the ball.

The description is given, as following the progress of a game, of the fact that this service is available without the linkage registration of each device before the game when this data conversion service of this soccer game is used.

The sub-device that is linked with the main device such as a smartphone is only the ground prior to the start of the game. This ground is linked with the service on the cloud through the main device such as a smartphone. This sub-device is fixed as the ground, so it is typically linked at the same time as the use of the service is started.

Players of both teams and a ball enter the ground. In this event, the ground detects that the ball and player's shoes have entered a predetermined area, and registers a soccer ball that is a sub-device having a ball profile by one in the service and registers shoes that is a sub-device having a player profile as much as the number of players in the service.

When the referee beats the kick-off whistle and the game begins, at that timing, the ball is in contact with the shoe and the time when the ball is in contact with the shoe is recorded in the ball, and at the same time, information on a player of the shoes is transferred. The time when the ball is in contact with the shoe and the information on the player of the shoes are transferred sequentially to the ball, so information is randomly collected in the ball during the game. Of course, a method of collecting information on the player's shoes rather than the ball or a method of collecting information in both the ball and the shoe may be possible.

As the game progresses, when the ball has crossed the touchline, the ball may be replaced with a new one in the case of multi-ball system. When the ball is replaced, the profile of this service defines a service having a profile of ball as at most one. In this case, at the timing when a new ball enters the ground, the ball is automatically replaced with a ball to be linked in the service side.

Further, in the case where the player temporarily goes out of the field for treatment or the like, the ground knows that the shoes of the player are out of the range, and so, at that timing, the service may be requested to cancel the linkage registration. Likewise, in the case of substitution of players, when a player leaves the ground, the main device requests the service to cancel the linkage registration of the shoes of the leaved player, and then, when a new player enters the ground, it is possible to request the service to register linkage of the shoes of the new player.

The sub-device such as ball and shoe goes out of the ground during halftime, after the game, or the like, so the main device can automatically request the service to cancel the linkage registration at that timing.

In this example, the description is given by taking the sub-devices such as ground, ball, and shoes as one example. However, practically, even when goal, keeper's gloves, or the like is intended to be linked, it is possible to register the sub-device as being linked with the service to use the service without causing the user to take an action for linkage in advance.

Moreover, in this third application example, the data conversion service of the soccer game is taken as one example, but it may be also possible to perform the similar processing in other group sports to perform the linkage among the tools. In one example, taking curling as one example, when a distance from the center is measured with something like a compass by a person in scoring points in the curling, service for curling facilities including systems that can be automatically measured using a sensor without measuring it by a person can be considered. In the curling, each team includes four people and each player delivers two stones at the end, so one team delivers eight stones at one end.

Thus, at the start of the game, eight stones per team are linked as the sub-device by using eight stones per team placed on the rink as a trigger, so it is possible to transmit information acquired from the stones to the cloud service. In other words, in scoring points in the curling, each stone automatically calculates the distance from the center using a sensor, so it is possible for the cloud service side to calculate automatically the score. In this case, in one example, if the lower limit and the upper limit of the sub-device having the attribute of the stone are set to 8, it is possible to prevent the cloud service from being used unless eight stones are linked as sub-devices per team.

### (Other Application Examples)

As other application examples, an example in which the main device is a motor vehicle and the sub-device is a digital video camera is conceived. The digital video camera as a sub-device is located at a predetermined place, such as on the dashboard of the driver's seat of the motor vehicle that is the main device, so the digital video camera is linked with the motor vehicle on the cloud service. It is possible for the motor vehicle to operate a digital video camera as a dash cam by using a moving image capturing function that is a function of a digital video camera.

### [1.3. Second Example]

Subsequently, the second example is described. In the second example, a system similar to the system of the first example is assumed. In other words, in this second example, a system allowing the service to be linked automatically with a device to be a target by the user is assumed.

In this second example, at the time of the linkage registration of the sub-device, the network bandwidth between the sub-devices associated with the user is optimized automatically. In one example, if there are a sub-device that can use only 3G network and a sub-device that can use 4G (LTE) network, the sub-device that can use 4G (LTE) network is selected as a device that communicates with the service in performing the linkage registration of the sub-device. It is assumed that at least one device among devices associated with the user has a function of monitoring the state of all the devices.

A device having a function of monitoring the state of the device can adjust the network bandwidth between the devices by notifying each device of the network bandwidth information. Moreover, the bandwidth adjustment function executed by the device having the function of monitoring the state of the device may be programmable. The programmable bandwidth adjustment function makes it possible for the user using the service to determine the network bandwidth or to download the network bandwidth adjustment method from the service to adjust the bandwidth on the basis of the adjustment method.

The target executed by the device having the function of monitoring the state of the device is not limited to the bandwidth control of the network between the devices. In one example, audio calibration between devices can be performed automatically between devices rather than being adjusted by the user.

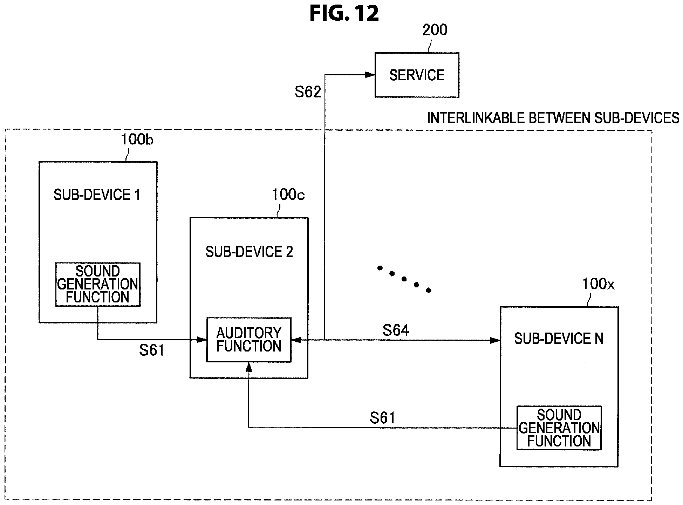

FIG. 12 is a diagram illustrated to describe the operation of the second example of the present embodiment. FIG. 12 illustrates an example of operation performed when audio calibration between devices is performed automatically.

When the sub-devices 100b and 100x output sound using the sound generation function of a loudspeaker or the like (step S61) and another sub-device 100c collects the sound using an auditory function of a microphone or the like, the sub-device 100c transmits the collected sound to the service 200 (step S62).

The service 200 analyzes the sound transmitted from the sub-device 100c, and if it is determined that calibration is necessary, the service 200 transmits an instruction to perform audio calibration to the sub-device 100c (step S63). This instruction to perform audio calibration may be performed by specifying a sub-device to perform the calibration.

The sub-device 100c, when receiving the instruction to perform audio calibration from the service 200, informs the other sub-devices 100b,..., 100x of the instruction to perform audio calibration (step S64). The sub-device 100c may inform only the sub-device specified by the service 200 of the instruction to perform audio calibration.

An application example in the case where the above-described second example is applied to a particular service is now described.

### (First Application Example: control and synchronization of bandwidth of surround system by multiple loudspeakers)

In the first application example, it is conceivable that the control and synchronization of bandwidth of a surround system using a plurality of loudspeakers, such as 5.1-channel or 22.1-channel, are performed. In this system, it is assumed that the surround system using a plurality of loudspeakers is linked with the loudspeaker functions of various devices held by the user such that the stream playback of the music from the cloud side is performed.

Some devices include devices directly accessible to services on the cloud and devices directly accessible to services on the cloud via other linked devices. One or more devices directly accessible to the service on the cloud acquire an audio stream from the cloud side. When the audio stream is acquired from the cloud side, audio data output from a device that fails to communicate directly with the service on the cloud is acquired via a directly accessible device. Here, the bandwidth adjustment is typically performed between the devices so that there is no bias between the devices and the stream can be stably reproduced.

Further, when the surround system is implemented by such a mechanism, there is a possibility that a delay occurs depending on the communication environment between the devices, and the synchronization of the sound output from the respective loudspeakers may deviate. Thus, in this surround system, the calibration is performed automatically by detecting synchronization deviation between the devices. As described above, the detection of the synchronization deviation can be performed depending on whether a certain device collects the sound output from the loudspeaker with the microphone and whether the collected sound deviates.

### [1.4. Third Example]

Subsequently, a third example is described. In the second example, a system similar to the system of the first example is assumed. In other words, in this third example, a system allowing the service to be linked automatically with a device to be a target by the user is assumed.

The third example describes an example in which only some functions are available instead of making all the functions of the linked devices available at the time of linkage of a device. Specifically, a function that can be disclosed (access right) at the time of linkage is set in the device profile of each device. Then, when the device is registered as being linked, it is determined by the service whether the device can be linked in accordance with the access right.

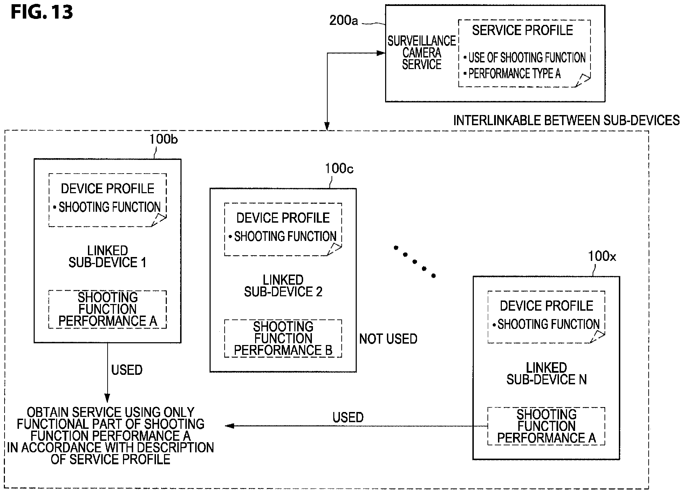

FIG. 13 is a diagram illustrated to describe the third example according to the embodiment of the present disclosure. FIG. 13 exemplifies a surveillance camera service 200a that functions as a surveillance camera using a shooting function, such as a camera of a linked sub-device, as a cloud service.

The surveillance camera service 200a is a cloud service that monitors a predetermined monitoring object, for example, the entire building, analyzes the monitoring video, and finds a specific object or the like. It is conceivable that the monitoring camera service 200a capturing a monitoring video uses a device with camera function that is located inside or around the building is used, such as a fixed-point camera in the vicinity of the building or a smartphone inside the building, in addition to a fixed camera installed in the building.

In the normal state, the surveillance camera service 200a captures the surveillance video from only the camera installed in the building. However, in the case of finding a particular person or object and following it, the surveillance camera service 200a also uses the video captured by the device equipped with another camera. In this case, it is linked with the device that is in a state where it is linkable with the function of the camera in the profile of each device instead of being linked with all the devices with camera functions such as a smartphone.

The surveillance camera service 200a defines the use of the shooting function of the sub-device whose performance type is "A" in the service profile. In this case, the sub-devices 100b and 100x whose performance types are defined as "A" in the device profile use the shooting function through the surveillance camera service 200a. However, the sub-device 100c whose performance type is defined as "B" in the device profile does not use the shooting function through the surveillance camera service 200a. In this manner, depending on whether the device has the function defined in the service profile, it is possible to make the device that uses the function different.

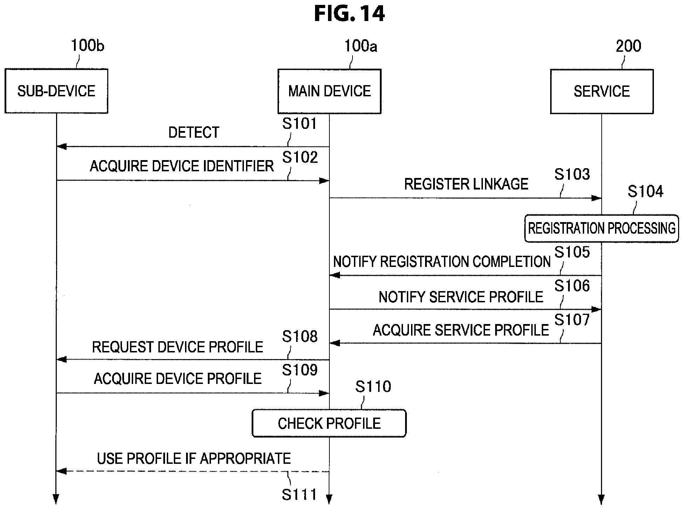

FIG. 14 is a sequence diagram illustrating an exemplary operation in the third example. FIG. 14 illustrates an example of operation when the main device 100a acquires the device profile of the sub-device 100b and the service profile of the service 200 and uses the function of the sub-device 100b.

First, when the main device 100a detects the presence of the sub-device 100b (step S101), the main device 100a acquires a device identifier from the sub-device 100b (step S102).

The main device 100a, when acquiring the device identifier from the sub-device 100b, requests the service 200 to perform the linkage registration by transmitting the device identifier of the sub-device 100b to the service 200 (step S103). The service 200 executes the linkage registration processing of the sub-device 100b (step S104), and notifies the main device 100a that the linkage registration is completed (step S105).

The main device 100a, when receiving the notification of the linkage registration completion, requests the service profile from the service 200 (step S106). The main device 100a acquires the service profile sent from the service 200 in response to the request for the service profile (step S107).

Further, the main device 100a requests the device profile from the sub-device 100b (step S108). The main device 100a acquires the device profile that is sent from the sub-device 100b in response to the request of the device profile (step S109). The order of acquisition of this service profile and device profile may be reversed.

The main device 100a checks the device profile of the sub-device 100b and the service profile of the service 200 (step S110). If the device profile of the sub-device 100b is suitable for the condition of the service profile of the service 200 as the result of the check, the main device 100a uses the function of the sub-device 100b (step S111).

The main device 100a acquires the device profile of the sub-device 100b and the service profile of the service 200, and checks the contents of each of them. Thus, if the result is suitable for the condition of the service profile of the service 200, it is possible for the main device 100a to use the function of the sub-device 100b.

Moreover, a function-based access right, a device-based access right centered on a device such as a person or object to be linked, or a time-based access right may be set.

According to the third example, it is possible to control the use of the function of the device on the basis of the contents of the device profile. Thus, it is possible to avoid the undesired linkage registration by the owner of the device and to prevent an authorized operation after linkage from being performed.

When the main device is linked with another device as in the third example, in the case where not all the functions of the linked sub-device can be used but only some of the functions can be used, the sub-device may activate only its function so that it can be used from the main device. In one example, when the sub-device is a television and only the loudspeaker function is to be linked from the main device, instead of activating the television itself, only the loudspeaker function of the television is activated, and the loudspeaker function can be in a state that is used from the main device.

The activation of only some functions of the sub-device can obtain advantageous effects to shorten the activation time of the function, to reduce the power consumption of the sub-device at the time of linkage with the main device, and to improve the security by preventing the function not necessary for linkage from being activated.

### [1.5. Fourth Example]

In the examples described above, two types of devices, a main device and a sub-device, are defined. However, in some cases, there may be no device serving as the main device. In the fourth example, the case where there is no device serving as a main device is described.

In one example, a case where the user uses an invasive device such as a contact lens type device is conceived. The device has information that can identify the user (user identifier). This invasive device itself does not necessarily have the function of communicating with the cloud service. However, in a case where a device having the user identifier does not have the function of communicating with the cloud service, it is necessary that one device of the linked sub-devices has a function capable of communicating with the cloud service. Of course, the invasive device may have a function that communicates with the cloud service, but in this case it can be handled as the same example as in the above-described first example.

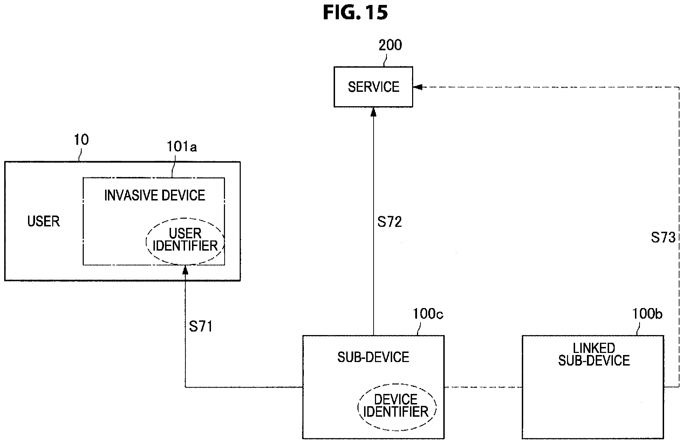

FIG. 15 is a diagram illustrated to describe the fourth example according to the embodiment of the present disclosure. FIG. 15 illustrates an exemplary operation in the case where the user 10 is the main device 101a and the device itself is wearing an invasive device having no function of communicating with the cloud service. The main device 101a internally holds a user identifier that can be used to identify the user 10.

In linking the sub-device 100b used in the service 200, the main device 101a fails to communicate with the service 200, so the sub-device 100b detects the invasive main device 101a used by the user 10 and acquires the user identifier held by the main device 101a (step S71).

The sub-device 100b, when acquiring the user identifier from the main device 101a, requests the service 200 to perform the linkage registration by transmitting the user identifier and its own device identifier to the service 200 (step S72). If there is a linked sub-device 100c, the sub-device 100b sends the user identifier and its own device identifier to the linked sub-device 100c so that the sub-device 100c may request the sub-device 100c to perform the linkage registration (step S73).

In other words, the fourth example indicates that the service 200 on the cloud is likely to fail to recognize each sub-device although it is linked internally. Practically, the fact that the service 200 on the cloud can recognize each of the sub-devices is the timing being linked with the sub-device that can communicate with the cloud among the sub-devices.

### (Application Example: Improvement service for improving golf skills)

As an application example of the fourth example, there is illustrated an example in the case of being suitable for the improvement service for improving golf skills illustrated in the application example of the first example. In the example illustrated above, there is a main device, for example, a smartphone. In this example, consider a situation in which the user places the smartphone in a locker and plays without holding the smartphone while playing golf.

In this case, it is assumed that the user wears an invasive device such as a contact lens type as a device having a user identifier. The function or performance of a golf club or a golf ball is assumed to be the same as that illustrated in the application example of the first example.

Unlike the application example of the first example, a case where a golf bag is newly provided with a communication function is now considered. When a user pulls out a golf club from a golf bag, the golf club is necessary to be registered as being linked. In this event, the golf club acquires the user ID from an invasive device such as a contact lens type, and transmits the acquired user ID and its own device identifier to the golf bag.

The golf bag transmits the information transmitted from the golf club using the communication function to the cloud service, so it requests the cloud service to register the linkage of the golf club that the user has pulled out from the golf bag.

When the user hits the golf ball and puts the golf club in the golf bag, the golf club transmits the swing information obtained by the acceleration sensor or the like to the golf bag. The golf bag transmits the swing information transmitted from the golf club to the cloud service.

In the case where the linked device is a golf ball, when the user pulls out the golf ball from the golf bag, the linkage registration is performed in the similar way to the case of the golf club. Then, when the golf ball and the golf bag are brought back to a certain distance or less where communication becomes possible again, such as hole-out, the information on the trajectory held by the golf ball is transmitted to the cloud service via the golf bag.

By implementing the service in this manner, even in the case of the fourth example in which the main device, for example, a smartphone does not exist when the user uses the service 200, it is possible to provide a situation in which the service 200 on the cloud is available.

### <2. Hardware Configuration Example>

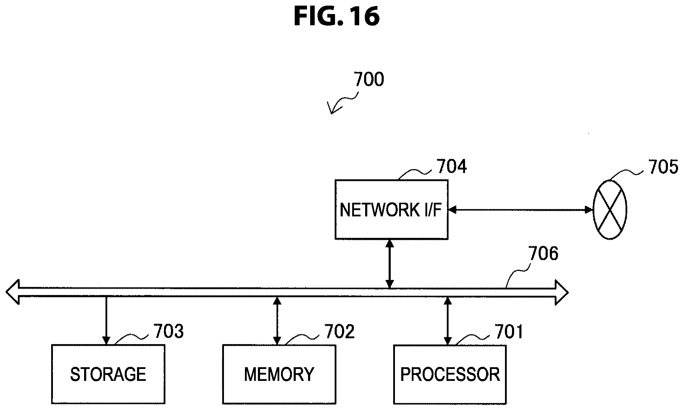

Next, a hardware configuration of the service 200 according to an embodiment of the present disclosure is described with reference to FIG. 16. FIG. 16 is a block diagram illustrating an example of a schematic configuration of a server 700. The server 700 includes a processor 701, a memory 702, a storage 703, a network interface 704, and a bus 706.

The processor 701 may be, in one example, a central processing unit (CPU) or a digital signal processor (DSP), and controls various functions of the server 700. The memory 702 includes a random access memory (RAM) and a read only memory (ROM) and stores a program executed by the processor 701 and data. The storage 703 can include a storage medium such as a semiconductor memory or a hard disk.

The network interface 704 is a wired communication interface for connecting the server 700 to a communicate network 705.

The bus 706 connects the processor 701, the memory 702, the storage 703, and the network interface 704 to one another. The bus 706 may include two or more buses having different speeds (in one example, high-speed bus, and low-speed bus).

In the server 700 illustrated in FIG. 16, one or more components (information acquisition unit 231 and/or control unit 233) included in the processing unit 230 described with reference to FIG. 4 may be mounted on the processor 701. As an example, a program for causing the processor to function as the above one or more components may be installed in the server 700, and the processor 701 may execute the program. As another example, a module including the processor 701 and the memory 702 may be mounted on the server 700, and the above one or more components may be mounted on the module. In this case, the above module may store the program for causing the processor to function as the above one or more components in the memory 702 and cause the processor 701 to execute the program. As described above, the server 700 or the above module may be provided as a device including the above one or more components, and the above program for causing the processor to function as the above one or more components may be provided. Further, a readable recording medium on which the above program is recorded may be provided.

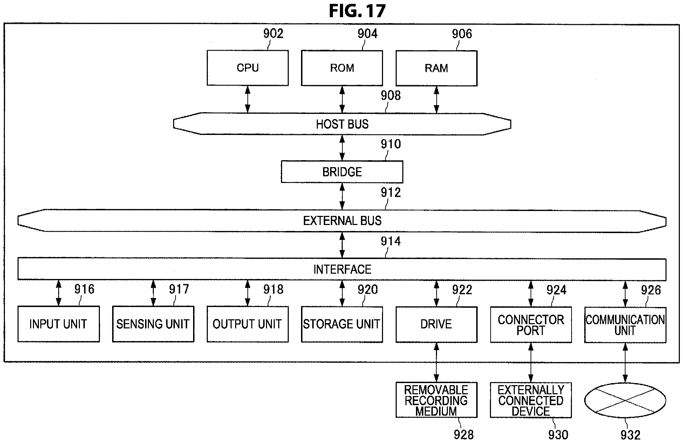

Next, a hardware configuration of the device 100 according to an embodiment of the present disclosure is described with reference to FIG. 17. FIG. 17 is a block diagram illustrating a hardware configuration example of the device 100 according to the embodiment of the present disclosure. Each of the algorithms described above can be executed by using, in one example, the hardware configuration of the information processing device illustrated in FIG. 17. That is, it is possible to implement the processing of each of the algorithms by controlling the hardware illustrated in FIG. 17 using a computer program.

Moreover, the hardware mode of hardware 900 illustrated in FIG. 17 may be optional. Examples of this hardware modes include a personal computer, a mobile information terminal such as a mobile phone, a PHS or a PDA, a game machine, a contact or contactless IC chip, a contact or contactless IC card, a loud loudspeaker, a television set, a monitor, a wearable device, or other various types of information appliances. Note that the PHS is an abbreviation for Personal Handy-phone System. In addition, the PDA is an abbreviation for Personal Digital Assistant.

As illustrated in FIG. 17, this hardware 900 mainly includes a CPU 902, a ROM 904, a RAM 906, a host bus 908, and a bridge 910. This hardware further includes an external bus 912, an interface 914, an input unit 916, a sensing unit 917, an output unit 918, a storage unit 920, a drive 922, a connector port 924, and a communication unit 926. Note that the CPU is an abbreviation for Central Processing Unit, the ROM is an abbreviation for Read Only Memory, and the RAM is an abbreviation for Random Access Memory.

The CPU 902 functions as an arithmetic processing unit or a control unit, and controls some or all of the operations of the respective components on the basis of various programs recorded on the ROM 904, the RAM 906, the storage unit 920, or a removable recording medium 928. The ROM 904 is a means for storing a program to be loaded into the CPU 902 or data or the like used in an arithmetic operation. The RAM 906 temporarily or permanently stores, in one example, a program to be loaded into the CPU 902, or various types of parameters or the like changed as appropriate upon execution of the program.

These components are connected to each other through, in one example, the host bus 908 capable of performing high-speed data transmission. On the other hand, the host bus 908 is connected, in one example, through the bridge 910 to the external bus 912 whose data transmission speed is relatively low. In addition, examples of the input unit 916 include a mouse, a keyboard, a touch panel, a button, a switch, and a lever. Furthermore, examples of the input unit 916 include a remote controller capable of transmitting a control signal by using an infrared ray or other radio waves. The sensing unit 917 corresponds to the sensor 140 illustrated in FIG. 3 and is a device that senses various states. In one example, the sensing unit 917 is a device that senses contact with a human body or close proximity of it, or senses contact with another device or close proximity of it. Examples of the sensing unit 917 may include a resistive film touch sensor or a capacitive touch sensor. In addition, an example of the sensing unit 917 may include a device that senses the radio wave intensity, sound intensity, light intensity, or the like of radio waves emitted from other devices. In addition, in one example, the sensing unit 917 is a device that senses the current position.

The output unit 918 is a device allowing visual, tactile, or auditory notification of acquired information to a user, and examples thereof include a display device such as CRT, LCD, PDP, and ELD, an audio output device such as loudspeaker or headphone, a printer, a mobile phone, a vibrator, and a facsimile. Note that the CRT is an abbreviation for Cathode Ray Tube, the LCD is an abbreviation for Liquid Crystal Display, the PDP is an abbreviation for Plasma Display Panel, and the ELD is an abbreviation for Electro-Luminescence Display.

The storage unit 920 is a device for storing various data. Examples of the storage unit 920 include a magnetic storage device such as a hard disk drive (HDD), a semiconductor storage device, an optical storage device, or a magneto-optical storage device. Note that the HDD is an abbreviation for Hard Disk Drive.

The drive 922 is a device that reads information recorded on the removable recording medium 928, such as a magnetic disk, an optical disc, a magneto-optical disc, or a semiconductor memory, or writes information in the removable recording medium 928. The removable recording medium 928 is, in one example, a DVD medium, a Blu-ray medium, an HD-DVD medium, various types of semiconductor storage media, or the like. Of course, the removable recording medium 928 may be, in one example, an IC card on which a contactless IC chip is mounted or electronic equipment. Note that the IC is an abbreviation for Integrated Circuit.

The connector port 924 is, in one example, a USB port, an IEEE1394 port, a SCSI, an RS-232C port, or a port for connecting an externally connected device 930 such as an optical audio terminal. The externally connected device 930 is, in one example, a printer, a mobile music player, a digital camera, a digital video camera, or an IC recorder. Note that the USB is an abbreviation for Universal Serial Bus, and the SCSI is an abbreviation for Small Computer System Interface.

The communication unit 926 is a communication device used to be connected to a network 932, and examples thereof include a communication card for a wired or wireless LAN, Bluetooth (registered trademark), or WUSB, an optical communication router, an ADSL router, or a device for contact or contactless communication. In addition, the network 932 connected to the communication unit 926 is configured from a wire-connected or wirelessly connected network, and is the Internet, a home-use LAN, infrared communication, visible light communication, broadcasting, or satellite communication, in one example. Note that the LAN is an abbreviation for Local Area Network, the WUSB is an abbreviation for Wireless USB, and the ADSL is an abbreviation for Asymmetric Digital Subscriber Line.

In the hardware 900 illustrated in FIG. 17, one or more components (the information acquisition unit 151 and/or the control unit 153) included in the processing unit 150 of the device 100 described with reference to FIG. 3 are mounted in the CPU 902. In addition, in the hardware 900 illustrated in FIG. 17, the drive 922, the removable recording medium 928, the connector port 924, and the externally connected device 930 are not indispensable components. In addition, in the hardware 900 illustrated in FIG. 17, the display device 130a, the sound generation device 130b, and the vibration device 130c in FIG. 11 can be configured as the output portion 918. In addition, in the hardware 900 illustrated in FIG. 17, the data transmitting device 130d in FIG. 11 can be configured as the communication unit 926.

### <3. Concluding Remarks>

As described above, according to the embodiment of the present disclosure, in the case where the relationship between devices satisfies the predetermined condition defined by the service, the device capable of requesting the service to perform the linkage registration of the device and the service are provided.

In the case where the relationship between devices satisfies the predetermined condition defined by the service, the service can be requested to perform the linkage registration of the device. Thus, it is possible to eliminate the necessity to register previously the device necessary for using the service and to change the linkage method at the timing when the predetermined condition is satisfied. Thus, according to the embodiment of the present disclosure, it is possible to improve significantly the user's convenience in using the service through a new device.

According to the embodiment of the present disclosure, it is possible to automatically adjust the network load or perform calibration between the linked devices (between the main device and the sub-device, or between the sub-devices), thereby reducing significantly the load on which the user performs such processing.

According to the embodiment of the present disclosure, the access control based on the device profile is available, so it is possible to avoid undesired linkage registration by the owner of the device and to prevent an unauthorized operation after linkage from being performed.

The procedure steps in the processing herein are not necessarily executed in a time series manner in the order described in the flowchart or the sequence diagram. In one example, the procedure steps in the processing may be executed in an order different from the order described as the flowchart or the sequence diagram, or may be executed in parallel.

Further, it is possible to create a computer program for causing a processor (e.g., CPU or DSP) provided in a device (e.g., terminal device, base station, control entity, or module thereof) of the present specification to function as the above-described device (i.e., a computer program for causing the processor to execute operations of components of the above-described device). In addition, a recording medium in which the computer program is recorded may be provided. Moreover, a device that includes a memory storing the computer program and one or more processors that can execute the computer program (e.g., a finished product or a module for the finished product (e.g., a part, a processing circuit, or a chip) may also be provided. In addition, a method including operations of one or more components of the above-described device (e.g., the information acquisition unit and/or the control unit) is also included in the technology according to the present disclosure.

In addition, some or all of the functional blocks shown in the functional block diagrams used in the above description may be implemented as a server device that is connected via a network such as the Internet. In addition, configurations of the functional blocks shown in the functional block diagrams used in the above description may be implemented in a single device or may be implemented in a system in which a plurality of devices are linked with one another. The system in which a plurality of devices are linked with one another may include, in one example, a combination of a plurality of server devices and a combination of a server device and a terminal device.

The preferred embodiment(s) of the present disclosure has/have been described above with reference to the accompanying drawings, whilst the technical scope of the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including:
   a control unit configured to transmit, when a relationship with a first device satisfies a predetermined condition defined by a predetermined service on a network, a user identifier used to identify a user and a device identifier used to identify the first device to the service and to request the service to perform processing related to linkage between the user identifier and the device identifier.
(2) The information processing device according to (1),
   in which the predetermined condition is a case where a positional relationship with the first device becomes a predetermined relationship, and the control unit requests the service to perform the processing when the positional relationship with the first device becomes the predetermined relationship.
(3) The information processing device according to (1),
   in which the predetermined condition is a state in which the first device is in contact or close proximity, and the control unit requests the service to perform the processing when the state in which the first device is in contact or close proximity is detected.
(4) The information processing device according to any one of (1) to (3),
   in which the control unit changes information to be exchanged with the linked first device on the basis of an attribute of the first device.
(5) The information processing device according to (4),
   in which the control unit changes information used when the processing is requested on the basis of reliability of the first device.
(6) The information processing device according to any one of (1) to (5),
   in which the control unit requests the service to perform the processing by recognizing a relationship with a second device different from the first device.
(7) The information processing device according to any one of (1) to (6),
   in which the control unit uses at least some of functions that the linked first device has.
(8) The information processing device according to (7),
   in which the control unit causes the first device to activate only some of functions that the linked first device has.
(9) The information processing device according to any one of (1) to (8),
   in which the control unit determines a function to be linked on the basis of an access right of the function that the first device has.
(10) The information processing device according to any one of (1) to (9),
   in which the control unit acquires the device identifier from the first device and requests the service to perform the processing with the user identifier held by the own device.
(11) The information processing device according to any one of (1) to (9),
   in which the control unit acquires the user identifier from the first device and requests the service to perform the processing with the device identifier held by the own device.
(12) The information processing device according to (11),
   in which the control unit provides the first device with the user identifier when a predetermined parameter of the first device satisfies a predetermined condition.
(13) The information processing device according to any one of (1) to (12),
   in which the control unit transmits information used to identify a user in the service to the service in addition to the user identifier.
(14) An information processing method including:
   transmitting, when a relationship with a first device satisfies a predetermined condition defined by a predetermined service on a network, a user identifier used to identify a user and a device identifier used to identify the first device to the service and requesting the service to perform processing related to linkage between the user identifier and the device identifier.
(15) A computer program causing a computer to execute:
   transmitting, when a relationship with a first device satisfies a predetermined condition defined by a predetermined service on a network, a user identifier used to identify a user and a device identifier used to identify the first device to the service and requesting the service to perform processing related to linkage between the user identifier and the device identifier.
(16) A control device including:
   a control unit configured to execute, in a service on a network to be provided, processing related to linkage between a user identifier used to identify a user and a device identifier used to identify a first device that uses the service,
   in which the control unit determines, when performing processing related to linkage between a device identifier of a second device different from the first device and the user identifier, whether to cancel the linkage between the device identifier of the first device and the user identifier on the basis of a predetermined condition.

### Reference Signs List

- 100a, 101a: main device
- 100b, 100c: sub-device

## Claims

1. An information processing device comprising:
a control unit configured to transmit, when a relationship with a first device satisfies a predetermined condition defined by a predetermined service on a network, a user identifier used to identify a user and a device identifier used to identify the first device to the service and to request the service to perform processing related to linkage between the user identifier and the device identifier.

2. The information processing device according to claim 1,
wherein the predetermined condition is a case where a positional relationship with the first device becomes a predetermined relationship, and the control unit requests the service to perform the processing when the positional relationship with the first device becomes the predetermined relationship.

3. The information processing device according to claim 1,
wherein the predetermined condition is a state in which the first device is in contact or close proximity, and the control unit requests the service to perform the processing when the state in which the first device is in contact or close proximity is detected.

4. The information processing device according to claim 1,
wherein the control unit changes information to be exchanged with the linked first device on the basis of an attribute of the first device.

5. The information processing device according to claim 4,
wherein the control unit changes information used when the processing is requested on the basis of reliability of the first device.

6. The information processing device according to claim 1,
wherein the control unit requests the service to perform the processing by recognizing a relationship with a second device different from the first device.

7. The information processing device according to claim 1,
wherein the control unit uses at least some of functions that the linked first device has.

8. The information processing device according to claim 7,
wherein the control unit causes the first device to activate only some of functions that the linked first device has.

9. The information processing device according to claim 1,
wherein the control unit determines a function to be linked on the basis of an access right of the function that the first device has.

10. The information processing device according to claim 1,
wherein the control unit acquires the device identifier from the first device and requests the service to perform the processing with the user identifier held by the own device.

11. The information processing device according to claim 1,
wherein the control unit acquires the user identifier from the first device and requests the service to perform the processing with the device identifier held by the own device.

12. The information processing device according to claim 11,
wherein the control unit provides the first device with the user identifier when a predetermined parameter of the first device satisfies a predetermined condition.

13. The information processing device according to claim 1,
wherein the control unit transmits information used to identify a user in the service to the service in addition to the user identifier.

14. An information processing method comprising:
transmitting, when a relationship with a first device satisfies a predetermined condition defined by a predetermined service on a network, a user identifier used to identify a user and a device identifier used to identify the first device to the service and requesting the service to perform processing related to linkage between the user identifier and the device identifier.

15. A computer program causing a computer to execute:
transmitting, when a relationship with a first device satisfies a predetermined condition defined by a predetermined service on a network, a user identifier used to identify a user and a device identifier used to identify the first device to the service and requesting the service to perform processing related to linkage between the user identifier and the device identifier.

16. A control device comprising:
a control unit configured to execute, in a service on a network to be provided, processing related to linkage between a user identifier used to identify a user and a device identifier used to identify a first device that uses the service,
wherein the control unit determines, when performing processing related to linkage between a device identifier of a second device different from the first device and the user identifier, whether to cancel the linkage between the device identifier of the first device and the user identifier on the basis of a predetermined condition.
